# DEMANDE DE BREVET EUROPEEN

(11) **EP 3 141 692 A1**
(43) Date de publication de la demande: **15.03.2017**
(21) Numéro de dépôt: 16187549.7
(22) Date de dépôt: 07.09.2016
(51) Int. Cl.: E21B 21/06

(54) **MATÉRIEL ET PROCÉDÉ PERMETTANT L'UTILISATION DIRECTE DE POLYMÈRE EN POUDRE DANS LA FRACTURATION HYDRAULIQUE**

(30) Priorité: 11.09.2015 FR 1558504
(71) Demandeur: S.P.C.M. SA, 42160 Andrézieux Bouthéon (FR)
(72) Inventeur: PICH, Emmanuel, 42270 SAINT PRIEST EN JAREZ (FR); BOND, Marshall, RICHMOND HILL, GA Georgia 31324 (US)
(74) Mandataire: Cabinet Laurent & Charras

(57) **Abrégé**

Installation pour le dosage et la dissolution d'un polymère en poudre de granulométrie comprise entre 100 et 500 micromètres destiné à alimenter une pompe d'injection (13) dans des opérations de fracturation hydraulique, comprenant successivement :
- une alimentation de polymère en poudre, provenant d'un camion (1) basculant pressurisé ou de big-bags vidés par transport pneumatique,
- un moyen de transport du polymère en poudre alimenté par un compresseur (3), et muni d'une vanne d'arrêt (4) du transport de polymère,
- une trémie de réception (5) du polymère en poudre présentant un niveau haut (6) et un niveau bas (6), la trémie étant équipée d'un filtre à poussière à décolmatage pneumatique, ainsi que de moyens de commandes de la vanne d'arrêt et du compresseur en fonction des niveaux hauts et bas,
- une vis doseuse (7) du polymère en poudre, positionnée à l'extrémité inférieure de la trémie (5), la vis étant équipée d'un moteur à vitesse variable et apte à être commandé à distance,
- un mélangeur dans lequel le polymère est dissous.

## Description

### DOMAINE DE L'INVENTION

La présente invention concerne le dosage et l'addition de polymères dans le domaine de la fracturation hydraulique. Plus précisément, la présente invention a pour objet un matériel de dosage et d'addition de polymères utilisés dans la fracturation hydraulique en tant que réducteur de trainée.

### ETAT ANTERIEUR DE LA TECHNIQUE

La fracturation hydraulique a pour but de créer une perméabilité supplémentaire et engendrer des surfaces de production de gaz ou de pétrole plus importantes au fond des puits. En effet, la faible perméabilité, les barrières naturelles de couches compactes, l'imperméabilisation par les opérations de forage limitent fortement la production d'hydrocarbures. Le gaz ou l'huile contenu dans le réservoir non conventionnel, ne peut pas migrer facilement de la roche vers le puits de production sans stimulation.

Le développement de la fracturation hydraulique a été tributaire de l'utilisation de polymères pour diminuer les pressions de pompage en surface, tout en maintenant la pression de fracturation au fond des puits. C'est ce qu'on appelle le phénomène de réduction de trainée (« drag réduction » en anglais).

La fracturation en fonds de puits nécessite des pressions de 70 à 200 bars avec de très importants volumes d'eau. Les pompes de surface travaillent à 300-600 bars en moyenne.

L'addition de faibles doses de polymères, spécialement du type polyacrylamide, permet de fracturer en augmentant fortement le débit injecté.

Ceci demande aujourd'hui d'injecter de fortes quantités de polymères en 10 ou 15 séquences sur 2 ou 3 jours. Ces quantités peuvent atteindre 10 tonnes pour une opération de fracturation.

Pour des questions de facilité de manipulation, pendant des années, on a utilisé les polyacrylamides sous forme d'émulsion avec les inconvénients suivants :
- Transport de quantités d'émulsions trois fois supérieures aux quantités de matières actives ;
- Coût pratiquement doublé par rapport à des polymères en poudre ;
- Injections d'hydrocarbures et de tensio-actifs de plus en plus contestées par les groupes écologistes ;
- Tendance à l'épaississement, malgré l'addition d'antigel, dans les zones à hiver très froid.

Récemment, pour des questions de coût et d'efficacité, des matériels ont été mis au point pour dissoudre des polymères en poudre sur des camions spécialisés (WO2010/020698). C'est en particulier le cas des camions PowderFrac™ utilisant un matériel de dispersion/broyage, améliorant la mise en suspension de ces poudres, leur dissolution et le pompage vers le mélangeur (blender) servant à alimenter la pompe à piston pour la fracturation. Cependant, le matériel est onéreux et demande un personnel relativement spécialisé.

Il existe donc aujourd'hui un besoin en matériel de dosage et d'addition de polymères ayant un coût moins important et une utilisation simplifiée.

### EXPOSE DE L'INVENTION

La présente invention concerne un matériel permettant le dosage d'un polymère en poudre, utilisé en tant que réducteur de trainée, dans un mélangeur alimentant une pompe d'injection destiné à des opérations de fracturation hydraulique.

De manière générale et connue dans le domaine de la fracturation hydraulique, le mélangeur est une cuve permettant de mélanger, dans de l'eau ou dans une saumure, le polymère ainsi que tous les autres ingrédients d'une composition d'injection, comme par exemple des dispersants, des agents anti-corrosions, des bactéricides, des oxydants, du sable.

Par ailleurs, le temps de passage du polymère dans le mélangeur est généralement de l'ordre de la minute.

De manière générale, les poudres standards de polymères utilisées dans la fracturation hydraulique, par exemple les polyacrylamides, de granulométrie 0-1 mm, et de très hauts poids moléculaires ont un temps de dissolution de 1 à 1,5 heures.

En fait, très souvent, ces polyacrylamides sont des co-polymères dont la vitesse de dissolution est fonction de leur composition, de leur poids moléculaire et de la méthode de production.

Les polyacrylamides sont acheminés sur les sites de fracturation sous forme de poudre et non sous forme liquide. En effet, le volume à transporter et à manipuler est bien moindre. Il est par ailleurs connu que le polymère doit être utilisé sous sa forme « active », c'est-à-dire sous forme de solution. Afin de dissoudre la poudre de polyacrylamides en solution avant son utilisation, on doit utiliser un matériel de dissolution de polymère comme par exemple le dispositif spécifique de dissolution du type PSU. Il permet de dissoudre la poudre de polymère, et est souvent associé à des cuves de maturation afin de dissoudre 100% du polymère tel que décrit dans les documents US2014/0054042A1 et US2013/0292122A1.

Contre toute attente, le Demandeur s'est aperçu que, pour des opérations de fracturation, il était suffisant de dissoudre 80 à 90% en poids du polymère, les 10 à 20% restants étant généralement dissous par effet mécanique de la pompe à piston, dans les canalisations de transport, d'injection ou de fracturation qui, au total, se situent entre 2000 et 5000 mètres du matériel de dosage selon l'invention.

Le problème posé était donc celui de mettre au point un matériel de dosage et de dissolution du polymère qui assure une dissolution de 80 à 90% de polymère à l'issue d'un passage de moins de 1 minute dans le mélangeur.

En d'autres termes, le temps de dissolution du polymère en poudre doit être inférieur au temps de passage dans le mélangeur, ou lui est au maximum 30% supérieur.
Pour résoudre ce problème, le Demandeur a mis au point une installation dans laquelle le dosage du polymère est effectué immédiatement en amont et à proximité du mélangeur, l'opération de dissolution en tant que telle étant effectuée directement dans le mélangeur. Pour contribuer à obtenir ce résultat, la taille des particules du polymère (granulométrie) est comprise entre 100 et 500 micromètres, préférentiellement entre 150 et 300 micromètres.

En d'autres termes, l'installation de l'invention ne requiert pas la mise en oeuvre d'un dispositif spécifique de dissolution de polymère autre que la cuve, en particulier d'un dispositif spécifique de dissolution du type PSU associé à une cuve de maturation tel que décrit dans les document US2014/0054042A1 et US2013/292122.

En d'autres termes, l'appareil de l'invention consiste à doser la poudre directement dans le mélangeur. La solution adoptée entre la vis doseuse et le mélangeur est avantageusement un transport pneumatique, ce qui évite tout problème de gel, lors de la mise en solution dans l'eau.

Le polymère arrive sur champs normalement en camions vrac de 16 à 20 tonnes, déchargés par un basculement de la citerne et une vidange par pression d'air. Le polymère peut arriver sous un autre conditionnement, comme par exemple en big bag et une adaptation sera faite en fonction des conditions logistiques.

En d'autres termes, l'invention a pour objet une installation pour le dosage et la dissolution d'un polymère en poudre de granulométrie comprise entre 100 et 500 micromètres destiné à alimenter une pompe d'injection dans des opérations de fracturation hydraulique, comprenant successivement, outre les tuyauteries de connexion:
- une alimentation de polymère en poudre, provenant d'un camion basculant pressurisé ou de big-bags vidés par transport pneumatique,
- un moyen de transport du polymère en poudre alimenté par un compresseur, et muni d'une vanne d'arrêt du transport de polymère,
- une trémie de réception du polymère en poudre présentant un niveau haut et un niveau bas, la trémie étant équipée d'un filtre à poussière à décolmatage pneumatique, ainsi que de moyens de commandes de la vanne d'arrêt et du compresseur en fonction des niveaux hauts et bas,
- une vis doseuse du polymère en poudre, positionnée à l'extrémité inférieure de la trémie, la vis étant équipée d'un moteur à vitesse variable et apte à être commandé à distance,
- un mélangeur dans lequel le polymère est dissous à raison de préférence d'au moins 80%, avantageusement entre 80 et 90%, de préférence en moins d'une minute.

Selon l'invention et comme il sera vu par la suite, la vis doseuse déverse le polymère soit directement dans le mélangeur, soit par le biais d'une tuyauterie équipée au moins d'un compresseur. L'installation est dépourvue de tout type d'appareil de dissolution du polymère entre la vis de dosage et le mélangeur.

Dans un premier mode de réalisation, la trémie est agencée latéralement par rapport au mélangeur. En pratique, elle est située près du camion ou des big-bags. Dans ce cas, l'installation comprend en outre un moyen de transport du polymère en poudre depuis la vis doseuse jusqu'au mélangeur. Le moyen de transport comprend préférentiellement un éjecteur, un compresseur qui l'alimente, et un tuyau de transport. Ainsi, le polymère en poudre est envoyé via le tuyau de transport dans le mélangeur sur une distance de 20 à 50 mètres.

Selon ce premier mode de réalisation, il y a un risque de poussière, en particulier en cas de vent. Pour l'éviter, l'installation peut en outre comprendre agencé à l'extrémité libre du tuyau de transport :
- soit un système de mouillage du polymère en poudre, comprenant un tube et des buses de pulvérisation ;
- soit une trémie de réception avec une écluse de sortie de poudre pour éviter la dispersion de fines due à l'air du transport,
- soit un cyclo-filtre.

Ainsi, à l'arrivée au-dessus du mélangeur la poudre peut être:
- soit éjectée telle quelle dans le mélangeur,
- soit mouillée par les buses de pulvérisation,
- soit traitée pour éviter la dispersion de fines due à l'air du transport en passant par la trémie de réception équipée d'une écluse ou par un cyclo filtre.

Dans un deuxième mode de réalisation, la trémie est positionnée au-dessus du mélangeur.

Dans ce cas, le moyen de transport entre la vis et le mélangeur n'est pas nécessaire. En pratique, la trémie est alimentée par séquence à partir du camion par transport pneumatique et la poudre est dosée à partir de la trémie, par exemple avec une écluse rotative. Optionnellement la trémie est équipée d'un filtre pour éviter de mettre à l'atmosphère des particules fines de polymère.

Selon ce deuxième mode de réalisation, l'installation peut en outre comprendre le même système de mouillage du polymère en poudre que décrit précédemment.

Un autre aspect de l'invention concerne un procédé de dosage et de dissolution d'un polymère en poudre de granulométrie comprise entre 100 et 500 micromètres destiné à alimenter une pompe d'injection dans des opérations de fracturation hydraulique d'une formation souterraine mettant en oeuvre l'installation décrite ci-dessus.

Le procédé de fracturation hydraulique d'une formation souterraine selon l'invention comprend les étapes suivantes :
- alimentation d'un polymère en poudre présentant une granulométrie comprise entre 100 et 500 micromètres du moyen de transport puis de la trémie de réception de l'installation de l'invention,
- après dosage, alimentation du polymère en poudre dans le mélangeur,
- formation d'un mélange par dissolution du polymère en poudre dans le mélangeur, de telle sorte qu'au moins 80% en poids du polymère en poudre, préférentiellement au moins 90% est dissous en moins d'une minute, en pratique entre 80 et 90%,
- injection du mélange résultant dans une formation souterraine.

A l'arrivée sur le mélangeur, le polymère en poudre peut être:
- soit éjecté tel quel dans le mélangeur,
- soit mouillé par un système de mouillage du polymère en poudre, comprenant un tube et des buses de pulvérisation agencées à l'extrémité libre du tuyau de transport,
- soit traité pour éviter la dispersion de fines due à l'air du transport en passant par la trémie de réception équipée d'une écluse ou par un cyclo filtre.

Comme déjà exposé, un critère de sélection est que le temps de dissolution du polymère en poudre est inférieur au temps de passage dans le mélangeur, ou lui est au maximum 30% supérieur.

Le procédé selon l'invention peut comprendre en outre une étape d'ajout dans le mélangeur d'autres ingrédients d'une composition d'injection de fracturation hydraulique, comme par exemple des dispersants, des agents anti-corrosions, des bactéricides, des oxydants, du sable. Cet ajout se fait généralement en continu pour obtenir un mélange homogène.

De manière avantageuse, le polymère poudre utilisé selon l'invention comprend au moins un monomère non ionique qui est sélectionné dans le groupe comprenant l'acrylamide, le méthacrylamide, des esters d'alkyle hydroxyle d'acide acrylique, des esters d'alkyle hydroxyle d'acide méthacrylique, du N-vinyle pyrrolidone, du N-vinyle formamide et du polyéthylène glycol méthacrylate. Préférentiellement, le monomère non ionique est l'acrylamide

Optionnellement, le polymère poudre utilisé selon l'invention peut comprendre au moins un monomère anionique qui est sélectionné dans le groupe comprenant l'acide acrylique, l'acide méthacrylique, l'acide allyle sulfonique, l'acide 2-acrylamido-2-méthyle propane sulfonique comme acides libres, ou des sels de ceux-ci.

Optionnellement, le polymère poudre utilisé selon l'invention peut comprendre au moins un monomère cationique qui est sélectionné dans le groupe comprenant l'ADAME quaternisé ou salifié, le MADAME quaternisé ou salifié, le DADMAC, l'APTAC et le MAPTAC.

Le poids moléculaire du polymère utilisé selon l'invention est compris entre 1 et 30 millions dalton, préférentiellement entre 5 et 25 millions dalton, plus préférentiellement entre 15 et 25 millions dalton.

Préférentiellement le polymère utilisé est un (co)polymère d'acrylamide.

L'invention et les avantages qui en découlent ressortiront mieux des figures et exemples suivants donnés afin d'illustrer l'invention et non de manière limitative.

### DESCRIPTION DES FIGURES

La figure 1 illustre les étapes de livraison, dosage, dissolution et injection d'un polymère en poudre dans un procédé de fracturation hydraulique selon un mode de réalisation particulier de l'invention.
La figure 2A illustre le mouillage d'un polymère en poudre, ajouté dans un mélangeur, dans un procédé de fracturation hydraulique selon un mode de réalisation particulier de l'invention.
La figure 2B illustre l'alimentation d'un polymère dans un mélangeur, dans un procédé de fracturation hydraulique selon un mode de réalisation particulier de l'invention.
La figure 3 illustre les étapes de livraison, dosage, dissolution et injection d'un polymère en poudre dans un procédé de fracturation hydraulique selon un mode de réalisation particulier de l'invention.

### DESCRIPTION DETAILLEE DE L'INVENTION

Le descriptif de matériel selon l'invention est le suivant :

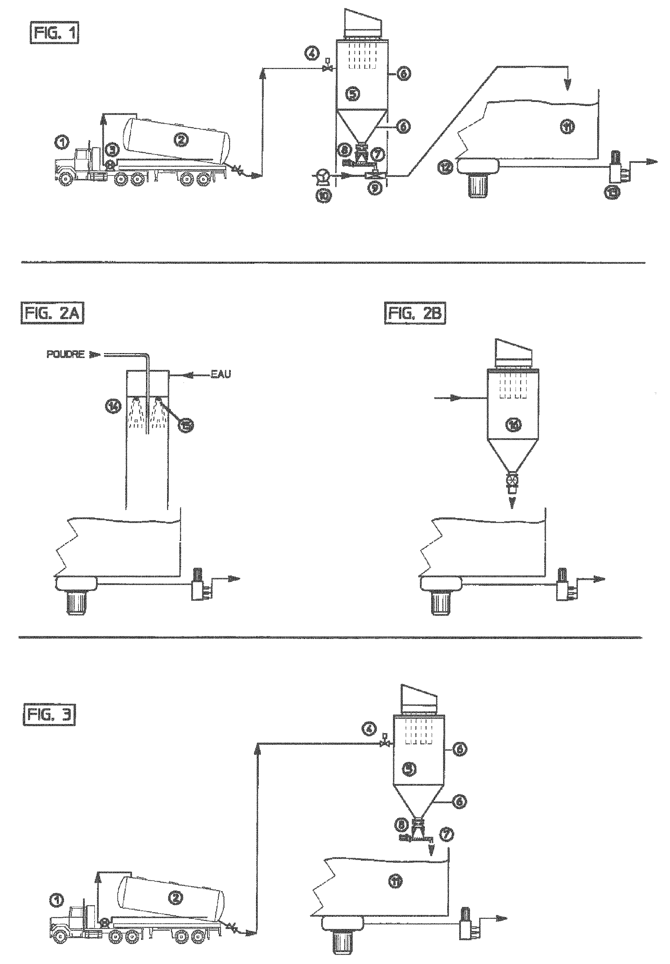

La figure 1 correspond au premier mode de réalisation.

Un camion de transport vrac (1) avec une citerne pression basculante (2) se vidange par pression à l'aide d'un compresseur (3) dans une trémie (5) par l'intermédiaire d'une vanne tout ou rien (4) commandée par les niveaux hauts et bas (6) de la trémie (5). Le dosage se fait par une vis doseuse (7) munie d'un moteur à vitesse variable (8) contrôlé par une salle de contrôle central.

Un éjecteur (9) alimenté par un compresseur (10) envoie la poudre vers le mélangeur (11) par le biais d'un tuyau de transport. Le mélangeur (11) est muni d'une pompe de gavage (12) de la pompe d'injection (13).

Dans le mélangeur (11), le polymère en poudre est avantageusement dissous en moins d'une minute. D'autres ingrédients de la composition d'injection peuvent être ajoutés.

Dans ce cas, pour éviter les poussières, l'alimentation du mélangeur (11) peut se faire :
- soit par un système de mouillage où la poudre est alimentée dans un tube (14), et mouillée par de l'eau ou une saumure provenant des buses de pulvérisation (15), (Figure 2A) ;
- soit par un cyclofiltre (16) permettant la séparation de l'air de la poudre éjectée par un tube calibré dans le mélangeur. (Figure 2B).

La figure 3 correspond au deuxième mode de réalisation.

Le camion (1) décharge la citerne (2) avec le compresseur (3) dans une trémie (5) située au-dessus du mélangeur par l'intermédiaire d'une vanne (4) commandée par des niveaux hauts et bas (6). La vis doseuse (7) avec moteur à vitesse variable (8) est commandée par la salle de contrôle principale.

Le matériel de dosage selon l'invention a les avantages suivants. Il peut remplacer à la fois :
- les émulsions, avec un coût moindre et une qualité supérieure ;
- les polymères en poudre mis en solution avant l'injection dans le mélangeur avec un matériel plus beaucoup lourd et de prix plus élevé.

L'homme de l'art pourra trouver des moyens similaires pour appliquer le procédé.

## Revendications

1. Installation pour le dosage et la dissolution d'un polymère en poudre de granulométrie comprise entre 100 et 500 micromètres destiné à alimenter une pompe d'injection (13) dans des opérations de fracturation hydraulique, comprenant successivement :
- une alimentation de polymère en poudre, provenant d'un camion (1) basculant pressurisé ou de big-bags vidés par transport pneumatique,
- un moyen de transport du polymère en poudre alimenté par un compresseur (3), et muni d'une vanne d'arrêt (4) du transport de polymère,
- une trémie de réception (5) du polymère en poudre présentant un niveau haut (6) et un niveau bas (6), la trémie étant équipée d'un filtre à poussière à décolmatage pneumatique, ainsi que de moyens de commandes de la vanne d'arrêt et du compresseur en fonction des niveaux hauts et bas,
- une vis doseuse (7) du polymère en poudre, positionnée à l'extrémité inférieure de la trémie (5), la vis étant équipée d'un moteur à vitesse variable et apte à être commandé à distance,
- un mélangeur dans lequel le polymère est dissous.

2. Installation selon la revendication 1, **caractérisée en ce que** lorsque la trémie (5) est agencée latéralement par rapport au mélangeur (11), ladite installation comprenant en outre un moyen de transport du polymère en poudre depuis la vis doseuse (7) jusqu'au mélangeur (11).

3. Installation selon la revendication 2, **caractérisée en ce que** le moyen de transport comprend un éjecteur (9), un compresseur (10) qui l'alimente, et un tuyau de transport.

4. Installation selon l'une des revendications 2 ou 3, **caractérisée en ce que** l'installation comprend en outre, agencé à l'extrémité libre du tuyau de transport :
- soit un système de mouillage du polymère en poudre, comprenant un tube (14) et des buses de pulvérisation (15) ;
- soit une trémie de réception avec une écluse de sortie de poudre ou un cyclo-filtre (16) pour éviter la dispersion de fines due à l'air du transport.

5. Installation selon la revendication 1, **caractérisée en ce que** la trémie (5) est positionnée au-dessus du mélangeur.

6. Installation selon la revendication 5, **caractérisée en ce que** l'installation comprend en outre un système de mouillage du polymère en poudre, comprenant un tube (14) et des buses de pulvérisation (15).

7. Procédé de dosage et de dissolution d'un polymère en poudre de granulométrie comprise entre 100 et 500 micromètres destiné à alimenter une pompe d'injection dans des opérations de fracturation hydraulique d'une formation souterraine mettant en oeuvre l'installation objet de l'une des revendications 1 à 6.

8. Procédé selon la revendication 7, **caractérisé en ce que** le procédé comprend les étapes suivantes :
- alimentation d'un polymère en poudre présentant une granulométrie comprise entre 100 et 500 micromètres du moyen de transport puis de la trémie de réception,
- après dosage, alimentation du polymère en poudre dans le mélangeur,
- formation d'un mélange par dissolution du polymère en poudre dans le mélangeur, de telle sorte qu'au moins 80% en poids du polymère en poudre est dissous en moins d'une minute,
- injection du mélange résultant dans une formation souterraine.

9. Procédé selon la revendication 8, **caractérisé en ce qu'**à l'arrivée sur le mélangeur, le polymère en poudre peut être:
- soit éjecté telle quel dans le mélangeur,
- soit mouillé par un système de mouillage du polymère en poudre, comprenant un tube et des buses de pulvérisation,
- soit traité pour éviter la dispersion de fines due à l'air du transport en passant soit par la trémie de réception équipée d'une écluse, soit par un cyclofiltre.

10. Procédé selon l'une des revendications 8 ou 9, **caractérisé en ce que** le polymère présente une granulométrie comprise entre 150 et 300 micromètres.
